# EUROPEAN PATENT APPLICATION

(11) **EP 4 714 788 A1**
(43) Date of publication of application: **25.03.2026**
(21) Application number: 25203677.7
(22) Date of filing: 22.09.2025
(51) Int. Cl.: B62D 7/04, B62D 5/04, B66F 9/075

(54) **MULTI-MODE DRIVE SYSTEM WITH SELECTIVELY ENGAGEABLE STEERING MODULE FOR MOBILE ROBOTS**

(30) Priority: 23.09.2024 IN 202411071877
(71) Applicant: Avridh Technologies, Inc., New Haven, Connecticut 06513 (US)
(72) Inventor: Kaimal, Ananthakrishnan Girish, 410206 Navi Mumbai (IN); Agarwal, Rishabh, 342003 Rajasthan (IN)
(74) Representative: Nirwan, Prajwal

(57) **Abstract**

Disclosed is a drive system (100) for a mobile robot (102). The drive system comprises: a structural frame (104); a driving module (110) comprising: at least two driving wheels (112a, 112b); and at least two driving motors (114a, 114b), wherein each individual one of the at least two driving motors comprises first sensor(s) (116) configured to sense an individual driving wheel rotation; and a steering module (118) comprising one of: a motor (120), a clutch actuator, wherein the one of: the motor, the clutch actuator comprises second sensor(s) (122) configured to sense an individual driving wheel rotation. When the drive system is in use, the steering module is disengaged from the driving module to drive the mobile robot in a steer driving mode, or the steering module is engaged with the driving module to drive the mobile robot in a differential driving mode.

## Description

### TECHNICAL FIELD

The present disclosure relates to drive systems for mobile robots.

### BACKGROUND

Autonomous mobile robots (AMRs) are a cornerstone of rapidly advancing robotics industry, enabling machines to navigate and perform tasks in dynamic environments without a direct human intervention. An ability of the AMRs to operate autonomously in both structured and unstructured environments has made them essential to modern industrial automation. Generally, an AMR utilises sensors, control systems, and algorithms to detect obstacles, generate environment maps, and make navigation-related decisions in real time or near-real time. The AMRs are widely deployed in industries, for example, such as manufacturing, logistics, hospitality, and healthcare for automating material handling, inventory management, and transportation tasks. Typically, the AMR utilises a drive system for manoeuvring and providing traction.

However, existing drive systems for mobile robots are associated with several limitations. Firstly, the existing drive systems are incapable and inefficient in managing different types of user assets (for example, such as pallets, trolleys, and the like) in a real-world environment where the mobile robots are being employed. This is because, for transporting the different types of user assets, several different configurations of the mobile robots are employed. Each of such different configurations rely on positionings of load-bearing elements (for example, such as idler wheels) in the drive systems, dimensional attributes of a given user asset, and a spatial configuration of handling interfaces (i.e., how the mobile robots lift, hold, or attach to the user assets). Due to this, employing such multiple mobile robots in the real-world environment is extremely expensive and cumbersome. In addition to this, such multiple mobile robots are likely prone to inefficiencies, increase downtime from frequent reconfigurations, and complicate maintenance and inventory tasks.

Secondly, some existing drive systems used in the AMRs for managing a payload rely on a condition that a centre of mass (COM) of the payload should lie close to a centre of driving wheels arranged in a mobile robot. However, when such a condition is not fulfilled (i.e., there are significant deviations or misalignments), there is an increased risk of the mobile robot or its driving wheels losing traction and sliding. In addition to this, suspension units in such drive systems are often designed to maintain either 3-point contact or 5-point contact, adding further complexity, especially as a drive-steer system struggles to maintain a stability under varying payload positions. A limited space for proper positioning of the COM of the payload, high vibrations, and surface sensitivity further exacerbate the aforesaid challenges. Furthermore, such drive systems are characterised by a large number of moving parts, making them difficult to integrate into multi-body solutions. Resultantly, a drive system with complex motion dependencies on the payload creates considerable challenges for load distribution and stability.

Therefore, in light of the foregoing discussion, there exists a need to overcome the aforementioned drawbacks.

### SUMMARY

The present disclosure seeks to provide a drive system for a mobile robot. The aim of the present disclosure is achieved by a drive system that enables a mobile robot to be driven in different driving modes by way of selectively engaging or disengaging a steering module with a driving module, thereby being able to manoeuvre a given user asset, in a cost-effective and time-efficient manner, as defined in the appended independent claims to which reference is made to. Advantageous features are set out in the appended dependent claims.

In an aspect, an embodiment of the present disclosure provides a drive system for a mobile robot, wherein the drive system comprises:
a structural frame having a first portion and a second portion;
a driving module arranged at the first portion of the structural frame, the driving module comprising:
   at least two driving wheels that are individually rotatable; and
   at least two driving motors, wherein each individual one of the at least two driving motors is mechanically coupled to respective ones of the at least two driving wheels, wherein each individual one of the at least two driving motors comprises at least one first sensor that, in operation, senses an individual driving wheel rotation; and
a steering module arranged perpendicular to the driving module, at the first portion of the structural frame, the steering module comprising one of: a motor, a clutch actuator, wherein the one of: the motor, the clutch actuator comprises at least one second sensor that, in operation, senses an individual driving wheel rotation,
wherein when the drive system is in use,
the steering module is disengaged from the driving module to drive the mobile robot in a steer driving mode, wherein the driving module moves the mobile robot and rotates a steer of the mobile robot using the at least two driving wheels, based on the sensed individual driving wheel rotation as sensed by the at least one first sensor, or
the steering module is engaged with the driving module to drive the mobile robot in a differential driving mode, wherein the steering module maintains a fixed steer of the mobile robot based on the sensed individual driving wheel rotation as sensed by the at least one second sensor, and the driving module moves the mobile robot using the at least two driving wheels.

Optionally, the at least one first sensor and the at least one second sensor comprise at least one of: an encoder, an inertial measurement unit (IMU).

Optionally, the drive system further comprises further comprises a plurality of coupling elements arranged between the steering module and the driving module, wherein the plurality of coupling elements are employed to mechanically couple the steering module and the driving module.

Optionally, the at least one first sensor and each individual one of the at least two driving motors are integrated together; and
the at least one second sensor and the one of: the motor, the clutch actuator are integrated together.

Optionally, the mobile robot is driven in any one of: the steer driving mode, the differential driving mode, based on at least one of: (i) a type of a user asset carried by the mobile robot, (ii) a turning radius for navigating on a path on which the mobile robot is to be driven.

Optionally, the steer driving mode is a default driving mode for driving the mobile robot.

Optionally, the drive system further comprises a controller communicably coupled to the driving module and the steering module, wherein the controller is configured to generate at least one of:
a control signal for the steering module to disengage from or engage with the driving module;
a control signal for the at least two driving motors to selectively vary velocities of the at least two driving motors.

Optionally, the drive system further comprises at least one pair of driven wheels arranged at the second portion of the structural frame.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

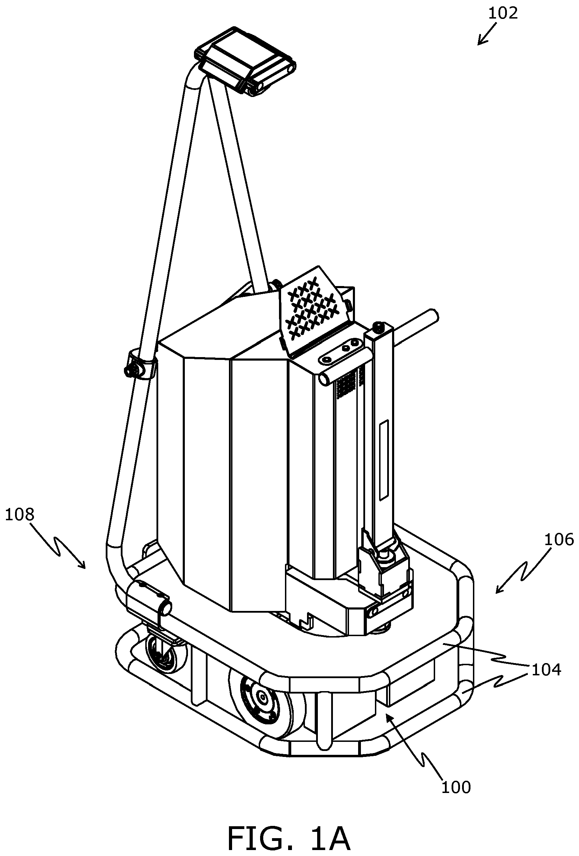

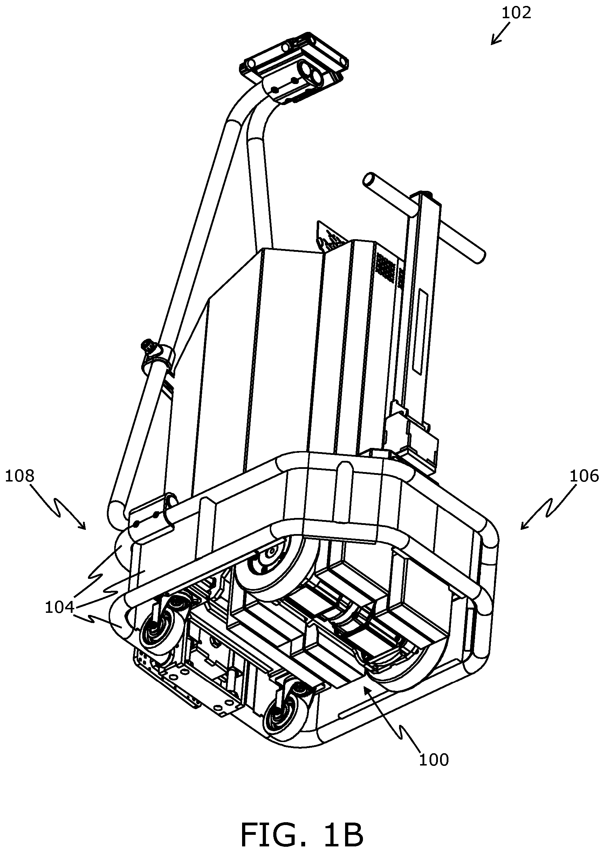

FIGs. 1A and 1B illustrate an exemplary scenario where a drive system for a mobile robot is employed, in accordance with an embodiment of the present disclosure; and

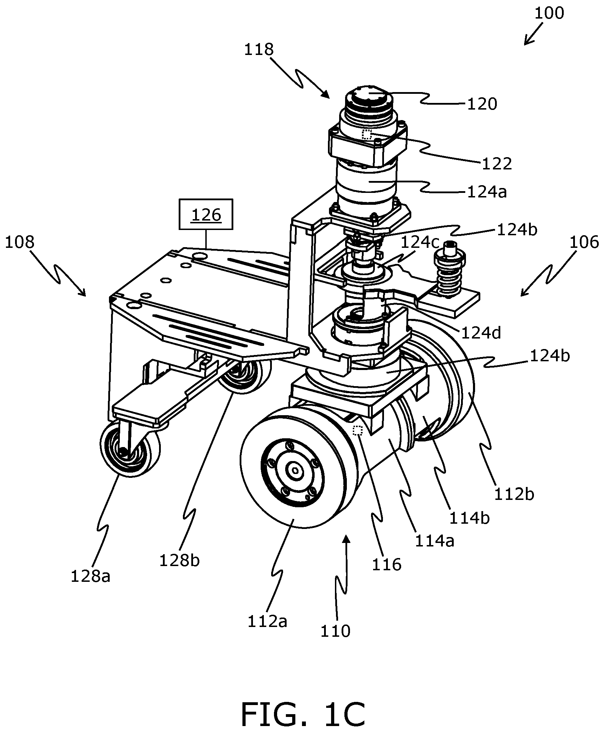

FIG. 1C illustrates a perspective view of the drive system for the mobile robot shown in FIGs. 1A and 1B, in accordance with an embodiment of the present disclosure.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

The present disclosure provides a drive system for a mobile robot. Herein, the mobile robot is capable of being driven in different driving modes (namely, a steer driving mode and a differential driving mode) by way of selectively engaging or disengaging a steering module with a driving module, thereby being able to manoeuvre a given user asset, in a cost-effective and time-efficient manner. Thus, the drive system is susceptible to be employed for performing diverse tasks, for example, such as pallet lifting, trolley train towing, and trolley manipulation, adapting to various operational requirements without a need for separate specialised machines. Further, the drive system provides a high traction capabilities and robustness, thus ensuring reliable operation even with heavy loads, independent of load characteristics. Since the drive system has an ability to switch between the steer driving mode and the differential driving mode, this allows the mobile robot to optimally perform in varying environments with and without load conditions. It will be appreciated that the drive system can be easily utilised to perform a controlled maneuver of a multi-body robotic unit for internal material movement applications. For example, the drive system enables in changing a steering angle of the mobile robot, by engaging (namely, locking) the steering module with the driving module, thereby aiding the mobile robot take precise turns accurately, without losing any traction over a ground surface. Employing the drive system can significantly reduce an equipment acquisition and maintenance costs in material handling operations. The drive system is simple, robust, and can be implemented with ease.

Referring to FIGs. 1A and 1B, illustrated is an exemplary scenario where a drive system **100** for a mobile robot **102** is employed, in accordance with an embodiment of the present disclosure. FIG. 1A depicts a first perspective view (namely, a top perspective view) of the mobile robot **102** in which the drive system **100** is employed, while FIG. 1B depicts a second perspective view (namely, a bottom perspective view) of the mobile robot **102** in which the drive system **100** is employed. With reference to FIGs. 1A and 1B, the drive system **100** is shown to comprise a structural frame **104** having a first portion **106** and a second portion **108.** Remaining components of the drive system **100** are explicitly shown in FIG. 1C, for sake of convenience and better understanding. It is to be noted that in FIG. 1A, the structural frame **104** is shown to be transparent only for sake of depicting the drive system **100** that is obscured by the structural frame **104** when viewed from an outside real-world environment.

Referring to FIG. 1C, illustrated is a perspective view of the drive system **100** for the mobile robot **102** shown in FIGs. 1A and 1B, in accordance with an embodiment of the present disclosure. The drive system **100** comprises:
the structural frame **104** having the first portion **106** and the second portion **108;**
a driving module **110** arranged at the first portion **106** of the structural frame **104,** the driving module **110** comprising:
   at least two driving wheels **112a** and **112b** that are individually rotatable; and
   at least two driving motors **114a** and **114b,** wherein each individual one of the at least two driving motors **114a** and **114b** is mechanically coupled to respective ones of the at least two driving wheels **112a** and **112b,** wherein each individual one of the at least two driving motors **114a** and **114b** comprises at least one first sensor (depicted as a first sensor **116)** that, in operation, senses an individual driving wheel rotation; and
a steering module **118** arranged perpendicular to the driving module **110,** at the first portion **106** of the structural frame **104,** the steering module **118** comprising one of: a motor **120,** a clutch actuator (not shown), wherein the one of: the motor **120,** the clutch actuator comprises at least one second sensor (depicted as a second sensor **122)** that, in operation, senses an individual driving wheel rotation,
wherein when the drive system **100** is in use,
the steering module **118** is disengaged from the driving module **110** to drive the mobile robot **102** in a steer driving mode, wherein the driving module **110** moves the mobile robot **102** and rotates a steer of the mobile robot **102** using the at least two driving wheels **112a** and **112b,** based on the sensed individual driving wheel rotation, or
the steering module **118** is engaged with the driving module **110** to drive the mobile robot **102** in a differential driving mode, wherein the steering module **118** maintains a fixed steer of the mobile robot **102** based on the sensed individual driving wheel rotation, and the driving module **110** moves the mobile robot **102** using the at least two driving wheels **112a** and **112b.**

Optionally, the drive system **100** further comprises a plurality of coupling elements (for example, depicted as coupling elements **124a, 124b, 124c, 124d,** and **124e)** arranged between the steering module **118** and the driving module **110.** Optionally, the drive system **100** further comprises a controller **126.** Optionally, the drive system **100** further comprises at least one pair of driven wheels **128a** and **128b** arranged at the second portion **108** of the structural frame **104.**

FIGs. 1A, 1B, and 1C are merely examples, which should not unduly limit the scope of the claims herein. The person skilled in the art will recognize many variations, alternatives, and modifications of embodiments of the present disclosure.

Throughout the present disclosure, the term *"mobile robot"* refers to an autonomous (or may be a semi-autonomous) device that is capable of moving within a real-world environment to perform a given task, unlike a stationary robot that typically operates in a fixed position. The given task could, for example, be a transportation task, a surveillance task, an environment mapping task, and the like. Mobile robots are well-known in the art.

Throughout the present disclosure, the term *"drive system"* refers to a combination of components being capable of providing a power to the mobile robot **102** and controlling a movement of the mobile robot **102** in the real-world environment, thereby enabling the mobile robot **102** to navigate and perform the given task autonomously (or may be semi-autonomously).

Throughout the present disclosure, the term *"structural frame"* refers to a mechanical structure that is utilised as a base or a chassis for arranging components of the drive system **100.** The structural frame **104** may be understood to be a weight bearing component of the mobile robot **102** which provides strength and rigidity to the mobile robot **102** (to withstand various forces or impacts, when the mobile robot **102** is in operation), whilst holding the components of the drive system **100.**

Throughout the present disclosure, the term *"driving module"* refers to a propulsion unit that is utilised for moving (namely, pulling) the mobile robot **102** in a given direction and additionally, optionally, for rotating the steer of the mobile robot **102** using the at least two driving wheels **112a** and **112b.**

Throughout the present disclosure, the term *"sensor"* refers to a device that is configured to sense (namely, detect) a rotational angle of an individual driving wheel (for example, such as driving wheels **112a** and **112b).** It will be appreciated that the at least one first sensor **116** is configured to sense the individual driving wheel rotation for providing a feedback for propulsion control and steering of the mobile robot **102** through differential driving wheel velocities, when the drive system **100** is in the steer driving mode. On the other hand, the at least one second sensor **122** is configured to sense the individual driving wheel rotation for performing a driving function, when the drive system **100** is in the differential driving mode wherein the fixed steer of the mobile robot **102** is maintained.

Optionally, the at least one first sensor **116** comprises a plurality of first sensors, wherein each first sensor **116** from amongst the plurality of first sensors, in operation, senses the individual driving wheel rotation. Similarly, optionally, the at least one second sensor **122** comprises a plurality of second sensors, wherein each second sensor **122** from amongst the plurality of second sensors, in operation, senses the individual driving wheel rotation. It will be appreciated that the individual driving wheel rotation facilitates in determining a steering angle at which a steer of the mobile robot **102** is to be rotated, when the drive system **100** is in use either in the steer driving mode or in the differential driving mode.

Throughout the present disclosure, the term *"steering module"* refers to a component that is selectively engageable with the driving module **110** to subsequently drive the mobile robot **102** in any one of: the steer driving mode, the differential driving mode.

Throughout the present disclosure, the term *"steer driving mode"* refers to an operational condition of the drive system **100** in which the steering module **118** is disengaged from the driving module **110,** and the mobile robot **102** is moved and steered using an independent control of the at least two driving wheels **112a** and **112b.** In the steer driving mode, a steering functionality is achieved by varying velocities of the at least two driving wheels **112a** and **112b** based on sensed individual driving wheel rotation from the at least one first sensor **116.** In other words, by varying the velocities of the at least two driving motors **114a** and **114b** relative to each other, the mobile robot **102** can change its steering direction. For example, increasing a velocity of a left driving wheel (such as the driving wheel **112a)** relative to a right driving wheel (such as the driving **112b)** may result in a steer of the mobile robot **102** in a rightward direction.

Throughout the present disclosure, the term *"differential driving mode"* refers to an operational condition of the drive system **100** in which the steering module **118** is engaged with the driving module **110,** thereby maintaining the fixed steer of the mobile robot **102** based on sensed individual driving wheel rotation from the at least one second sensor **122.** In the differential driving mode, the driving module **110** moves the mobile robot **102** forward or backward using the at least two driving wheels **112a** and **112b** without altering the steer of the mobile robot **102.** Steering changes are not actively induced since the steer is fixed by the engagement of the steering module **118.**

A technical benefit of the drive system **100** of the present disclosure lies in integration of dual driving modes within a single drive system architecture (namely, a multi-mode drive system). Unlike conventional drive systems that are constrained to either steer drive or differential drive, the drive system **100** of the present disclosure enables seamless switching between different driving modes by selective engagement or disengagement of the steering module **118.** In the steer driving mode, the mobile robot **102** achieves smooth navigation and variable turning radii, which are advantageous for applications requiring controlled and gradual manoeuvring, such as transporting sensitive loads. A reliance on feedback from the at least one first sensor **116** ensures high precision in steering adjustments and enhances trajectory accuracy. In the differential driving mode, the mobile robot **102** gains an ability to navigate in constrained environments with tight turning capability, while the steering module **118** maintains the steer in a stable orientation. This is particularly beneficial in warehouse and industrial environments where space efficiency is critical. Overall, the drive system **100** facilities in improving operational versatility, path adaptability, and manoeuvrability without requiring redundant, specialised hardware.

Optionally, the at least one first sensor **116** and the at least one second sensor **122** comprise at least one of: an encoder, an inertial measurement unit (IMU). A technical benefit of implementing a given sensor (namely, the at least one first sensor **116** and the at least one second sensor **122)** as the at least one of: the encoder, the IMU, is that it provides multi-modal sensing redundancy and enhances robustness of the drive system **100,** for example, in terms of measuring the individual driving wheel rotation which is useful in determining a steering angle at which the steer of the mobile robot **102** is to be rotated. In an example, when the encoder is employed, the drive system **100** benefits from highly accurate and drift-free wheel rotation measurements. In another example, when the IMU is employed, the drive system **100** benefits from resilience against wheel slippage and external disturbances, since an accelerometer and a gyroscope in the IMU can capture motion parameters that a typical encoder alone may not detect. Thus, by using a combination of the encoder and the IMU, the drive system **100** can achieve sensor fusion, combining high-resolution encoder feedback with comprehensive IMU data. This potentially results in reduced error accumulation in measuring the individual driving wheel rotation. Additionally, such a redundancy may ensure fault tolerance, as failure of one sensing modality can be compensated by the other. However, it is not always necessary to employ said combination of the encoder and the IMU i.e., either of the encoder or the IMU can also be beneficially employed for the same purpose.

The term *"encoder"* refers to an electromechanical sensor that converts an angular position or a rotational motion of a shaft (for example, of a given driving motor from amongst the at least two driving motors **114a** and **114b)** into electrical signals. Encoders may be incremental encoders or absolute encoders, and they provide real-time feedback pertaining to the individual driving wheel rotation with high accuracy. The term *"inertial measurement unit"* refers to a multi-sensor device configured to detect motion parameters of a given driving wheel (for example, such as the driving wheels **112a** and **112b).** Typically, the IMU comprises at least an accelerometer, which senses a linear acceleration, and a gyroscope, which senses an angular velocity. The IMU thus provides a comprehensive dataset for motion tracking as compared to encoders alone. Implementations of the encoders and the IMU are well-known in the art.

Optionally, the at least one first sensor **116** and each individual one of the at least two driving motors **114a** and **114b** are integrated together; and
the at least one second sensor **122** and the one of: the motor **120,** the clutch actuator are integrated together.

A technical benefit of such an integration ensures direct, real-time, and interference-free measurement of the individual driving wheel rotation, because sensors are built-in and their feedback is immediate, with no transmission delay, allowing faster control response. By integrating the at least one first sensor **116** directly into the given driving motor, and integrating the at least one second sensor **122** directly into the one of: the motor **120,** the clutch actuator, latency in signal transmission is minimised and propulsion feedback becomes highly accurate, enabling precise driving wheel velocity and steer control. This also enhances reliability, calibration stability, and fault detection in the drive system **100,** while also reducing wiring complexity and susceptibility to noise, resulting into a compact and efficient drive system for the mobile robot **102.**

Optionally, the drive system **100** further comprises a plurality of coupling elements **124a, 124b, 124c, 124d,** and **124e** arranged between the steering module **118** and the driving module **110,** wherein the plurality of coupling elements **124a, 124b, 124c, 124d,** and **124e** are employed to mechanically couple the steering module **118** and the driving module **110.** Herein, the term *"coupling element"* refers to a mechanical component disposed between the steering module **118** and the driving module **110** that facilitate a selective engagement and disengagement of torque or motion between the aforesaid modules. Optionally, a given coupling element is any one of: a gearbox, a clutch, a drive shaft. The phrase *"mechanically couple"* refers to an establishment of a torque-transmitting connection between the steering module **118** and the driving module **110,** such that motion imparted by the steering module **118** is transferred to or resisted by the driving module **110.** Conversely, mechanical decoupling refers to the disengagement of this torque transfer, thereby isolating the modules.

It will be appreciated that when the mobile robot **102** is intended to operate in the differential driving mode, the plurality of coupling elements **124a, 124b, 124c, 124d,** and **124e** establish a mechanical link that transmits a motion from the steering module **118** to the driving module **110.** For example, when the steering module **118** comprises the motor **120,** a gearbox may be disposed between the motor **120** and the driving module **110** to provide controlled engagement, torque transmission, and steer fixation. On the other hand, when the mobile robot **102** is intended to operate in the steer driving mode, the plurality of coupling elements **124a, 124b, 124c, 124d,** and **124e** are configured to disengage or remain inactive, thereby mechanically isolating the steering module **118** from the driving module **110.** In this condition, the steering function is accomplished solely by varying the velocities of the at least two driving wheels **112a** and **112b** under control of the at least two driving motors **114a** and **114b,** while the steering module **118** does not exert any influence. Advantageously, an introduction of the plurality of coupling elements **124a, 124b, 124c, 124d,** and **124e** between the steering module **118** and the driving module **110** provides mechanical flexibility and modularity in the drive system **100.** A primary technical benefit is that the drive system **100** can seamlessly switch between the steer driving mode and the differential driving mode without needing separate drive architectures.

Optionally, the mobile robot **102** is driven in any one of: the steer driving mode, the differential driving mode, based on at least one of: (i) a type of a user asset carried by the mobile robot **102,** (ii) a turning radius for navigating on a path on which the mobile robot **102** is to be driven. In this regard, a choice between the steer driving mode and the differential driving mode is not arbitrary but is determined based on at least one of the aforesaid factors. It will be appreciated that when the mobile robot **102** is tasked with transporting the user asset that is fragile, bulky, or requires smooth handling, the drive system **100** may default to or select the steer driving mode. In this driving mode, steering is controlled by adjusting relative driving wheel velocities, thereby producing smoother, controlled trajectories with reduced mechanical shocks. For example, when carrying delicate electronic components, the steer driving mode minimises abrupt turns and jerks. On the other hand, when the mobile robot **102** encounters navigation conditions requiring a small turning radius, such as manoeuvring through a congested warehouse aisle or turning around in a confined workspace, the drive system **100** may select the differential driving mode. In this driving mode, the steering module **118** engages to fix the steer, allowing the robot to execute tight turns or even pivot nearly in place, thus meeting said spatial constraints. It will also be appreciated that the determination of driving mode selection may be executed by the controller **126** that interprets task requirements or path data. The controller **126** may receive information from sensors, navigation algorithms, or operator inputs to decide whether the user asset characteristics or a path geometry necessitate the steer driving mode or the differential driving mode.

A technical benefit of this is that the drive system **100** becomes potentially adaptive and context-aware, for example, in term of optimising its driving mode according to operational demands. By linking driving mode selection to the type of user asset, the drive system **100** ensures safe and tailored handling of user assets (namely, payloads), thereby reducing risk of damage and increasing reliability in logistics or industrial operations. Moreover, by linking driving mode selection to the turning radius requirements of the path, the drive system **100** maximises navigational efficiency, enabling the mobile robot **102** to handle both open spaces and highly constrained environments with equal competence. This results in a drive system that offers dynamic versatility, enhancing applicability of the mobile robot **102** across diverse use-cases. An ability to automatically or selectively choose between the steer driving mode and the differential driving mode improves manoeuvrability and safety, and also extends a functional scope of the mobile robot **102** without additional hardware complexity.

Herein, the term *"user asset"* refers to any object carried, transported, or handled by the mobile robot **102.** The user asset may vary in size, shape, fragility, and weight, and these parameters influence a choice of driving mode to ensure safe and efficient handling of the user asset. Optionally, the user asset is any one of: a pallet, a trolley train, a shelf. Such user assets are well-known in the art. The term *"turning radius"* refers to a minimum curvature along which the mobile robot **102** can navigate along a given path. A turning radius requirement is dictated by a physical layout of the environment (for example, wide aisles or narrow corridors) in which the mobile robot **102** is employed, and determines whether the steer driving mode or differential driving mode should be selected.

Optionally, the steer driving mode is a default driving mode for driving the mobile robot **102.** A technical benefit of this implementation is that the drive system **100** inherently prioritises manoeuvrability and smooth navigation in its baseline configuration. Since the steer driving mode allows the mobile robot **102** to vary turning radii and execute controlled directional changes through differential driving wheel velocities, the mobile robot **102** can adapt more effectively to dynamic environments, curved paths, and obstacle-rich layouts, as compared to the differential driving mode, which locks the steer and restricts some flexibility. By making the steer driving mode as the default driving mode, the drive system **100** ensures that the mobile robot **102** consistently operates in a state offering superior manoeuvrability, responsive handling, and user-friendly navigation, thereby enhancing operational efficiency in a real-world deployment.

Optionally, the drive system **100** further comprises a controller **126** communicably coupled to the driving module **110** and the steering module **118,** wherein the controller **126** is configured to generate at least one of:
a control signal for the steering module **118** to disengage from or engage with the driving module **110;**
a control signal for the at least two driving motors **114a** and **114b** to selectively vary velocities of the at least two driving motors **114a** and **114b.**

Herein, the term *"controller"* refers to a processing unit that is configured to generate control signals for at least the steering module **118** and the driving module **110.** Optionally, the controller **126** is implemented as any one of: a microcontroller, a programmable logic controller, an embedded processor. Further, the term *"control signal"* refers to an electrical or electronic signal generated by the controller **126,** which commands actuation or state change of a component of the drive system **100.** A given control signal may include voltage, current, or digital communication packets that instruct said components to perform a particular function.

The phrase *"disengage from or engage with"* refers to an ability of the controller **126** to command the steering module **118** to either mechanically couple to the driving module **110** via the plurality of coupling elements **124a, 124b, 124c, 124d,** and **124e,** or mechanically isolate itself from the driving module **110,** depending on the selected driving mode. The phrase *"selectively vary velocities"* refers to the independent adjustment of the velocities of the at least two driving motors **114a** and **114b,** thereby enabling the controller **126** to regulate propulsion and steering functions in the steer driving mode.

It will be appreciated that the controller **126** receives feedback from the at least one first sensor **116** associated with the at least two driving motors **114a** and **114b** and from the at least one second sensor **122** associated with the steering module **118.** Based on this feedback and operational requirements (for example, such as a user asset type and/or a turning radius), the controller **126** generates corresponding control signals. When the drive system **100** needs to switch between the steer driving mode and the differential driving mode, the controller **126** generates the control signal for the steering module **118,** instructing the steering module **118** either to engage the plurality of coupling elements **124a, 124b, 124c, 124d,** and **124e** with the driving module **110** (activating the differential driving mode) or to disengage the plurality of coupling elements **124a, 124b, 124c, 124d,** and **124e** (activating the steer driving mode). Additionally, during operation in the steer driving mode, the controller **126** generates control signals for the at least two driving motors **114a** and **114b** to vary their velocities selectively. By increasing or decreasing relative driving wheel velocities, the mobile robot **102** can be steered smoothly in an intended direction. The real-time sensor data ensures that these variations are accurate and dynamically responsive to path conditions. Overall, the controller **126** functions as a decision-making and actuation management unit, ensuring correct mode switching and continuous regulation of driving wheel velocities to achieve reliable navigation. A technical benefit of employing the controller **126** is that it enables automated, intelligent, and precise management of function in the drive system **100,** eliminating a need for manual intervention or complex mechanical switching. By directly commanding both the steering module **118** and the at least two driving motors **114a** and **114b,** the controller **126** ensures seamless transitions between driving modes and real-time adjustment of the driving wheel velocities, which enhances navigation accuracy.

Optionally, the drive system **100** further comprises at least one pair of driven wheels **128a** and **128b** arranged at the second portion **108** of the structural frame **104..** The term *"driven wheel"* refers to a wheel whose movement depends on a movement of the at least two driving wheels **112a** and **112b,** to assist in a movement or support of the mobile robot **102.** A technical benefit of employing the at least one pair of driven wheels **128a** and **128b** is that said driven wheels **128a** and **128b** provide mechanical stability and balance to the drive system **100.** By supporting a weight distribution in the mobile robot **102** and complementing the at least two driving wheels **112a** and **112b** arranged at the first portion **106,** said driven wheels **128a** and **128b** prevent tilting, wobbling, or uneven load transfer during a motion of the mobile robot **102.** This results in enhanced stability, smoother travel over varying surfaces, and improved payload handling, ensuring that the mobile robot **102** maintains consistent orientation and safe operation under different driving modes. Optionally, the at least one pair of driven wheels **128a** and **128b** is implemented as a pair of castor wheels.

## Claims

1. A drive system (100) for a mobile robot (102), wherein the drive system comprises:
a structural frame (104) having a first portion (106) and a second portion (108);
a driving module (110) arranged at the first portion of the structural frame, the driving module comprising:
at least two driving wheels (112a, 112b) that are individually rotatable; and
at least two driving motors (114a, 114b), wherein each individual one of the at least two driving motors is mechanically coupled to respective ones of the at least two driving wheels, wherein each individual one of the at least two driving motors comprises at least one first sensor (116) that, in operation, senses an individual driving wheel rotation; and
a steering module (118) arranged perpendicular to the driving module, at the first portion of the structural frame, the steering module comprising one of: a motor (120), a clutch actuator, wherein the one of: the motor, the clutch actuator comprises at least one second sensor (122) that, in operation, senses an individual driving wheel rotation,
wherein when the drive system is in use,
the steering module is disengaged from the driving module to drive the mobile robot in a steer driving mode, wherein the driving module moves the mobile robot and rotates a steer of the mobile robot using the at least two driving wheels, based on the sensed individual driving wheel rotation as sensed by the at least one first sensor, or
the steering module is engaged with the driving module to drive the mobile robot in a differential driving mode, wherein the steering module maintains a fixed steer of the mobile robot based on the sensed individual driving wheel rotation as sensed by the at least one second sensor, and the driving module moves the mobile robot using the at least two driving wheels.

2. A drive system (100) of claim 1, wherein the at least one first sensor (166) and the at least one second sensor (122) comprise at least one of: an encoder, an inertial measurement unit (IMU).

3. A drive system (100) of any of the preceding claims, further comprising a plurality of coupling elements (124a, 124b, 124c, 124d, 124e) arranged between the steering module (118) and the driving module (110), wherein the plurality of coupling elements are employed to mechanically couple the steering module and the driving module.

4. A drive system (100) of any of the preceding claims, wherein:
the at least one first sensor (116) and each individual one of the at least two driving motors (114a, 114b) are integrated together; and
the at least one second sensor (122) and the one of: the motor (120), the clutch actuator are integrated together.

5. A drive system (100) of any of the preceding claims, wherein the mobile robot (102) is driven in any one of: the steer driving mode, the differential driving mode, based on at least one of: (i) a type of a user asset carried by the mobile robot, (ii) a turning radius for navigating on a path on which the mobile robot is to be driven.

6. A drive system (100) of any of the preceding claims, wherein the steer driving mode is a default driving mode for driving the mobile robot (102).

7. A drive system (100) of any of the preceding claims, further comprising a controller (126) communicably coupled to the driving module (110) and the steering module (118), wherein the controller is configured to generate at least one of:
a control signal for the steering module to disengage from or engage with the driving module;
a control signal for the at least two driving motors (114a, 114b) to selectively vary velocities of the at least two driving motors.

8. A drive system (100) of any of the preceding claims, further comprising at least one pair of driven wheels (128a, 128b) arranged at the second portion (108) of the structural frame (104).
